# EUROPÄISCHE PATENTSCHRIFT

(11) **EP 3 258 521 B1**
(45) Veröffentlichungstag und Bekanntmachung des Hinweises auf die Patenterteilung: **04.11.2020**
(21) Anmeldenummer: 16174349.7
(22) Anmeldetag: 14.06.2016
(51) Int. Cl.: H01M 4/38, H01M 4/505, H01M 4/62, H01M 6/16, H01M 4/50

(54) **LITHIUM-PRIMÄRZELLE MIT DME-FREIEM ELEKTROLYTEN**
LITHIUM PRIMARY CELL WITH DME-FREE ELECTROLYTES
CELLULE PRIMAIRE AU LITHIUM COMPRENANT DES ELECTROLYTES NE CONTENANT PAS DE DME

(43) Veröffentlichungstag der Anmeldung: 20.12.2017
(73) Patentinhaber: VARTA Microbattery GmbH, 73479 Ellwangen Jagst (DE)
(72) Erfinder: Kreidler, Bernd, 73479 Ellwangen (DE); Siwek, Hanna, 73479 Ellwangen (DE)
(74) Vertreter: Patentanwaltskanzlei Cartagena

(56) Entgegenhaltungen:
- JP-A- 2009 123 470
- JP-A- 2009 289 631
- US-A- 4 401 735
- US-A- 4 490 449
- US-A1- 2009 123 844
- US-A1- 2009 214 950
- TOBISHIMA S I ET AL: "Ethylene carbonate/ether mixed solvents electrolyte for lithium batteries", ELECTROCHIMICA ACTA, ELSEVIER SCIENCE PUBLISHERS, BARKING, GB, Bd. 29, Nr. 10, 1. Oktober 1984 (1984-10-01), Seiten 1471-1476, XP026517229, ISSN: 0013-4686, DOI: 10.1016/0013-4686(84)87030-9 [gefunden am 1984-10-01]

## Beschreibung

Die im Folgenden beschriebene Erfindung betrifft eine Lithium-Batterie.

Der Begriff "Batterie" meinte ursprünglich mehrere in Serie geschaltete elektrochemische Zellen. Heute werden jedoch sehr häufig, auch in der nachfolgenden Beschreibung, mit dem Begriff "Batterie" auch einzelne elektrochemische Zellen (Einzelzellen) bezeichnet. Nicht wieder aufladbare Batterien bezeichnet man als Primärbatterien bzw. Primärzellen.

Bei Lithium-Batterien handelt es sich häufig um Zellen, die Lithium als Aktivmaterial in der negativen Elektrode verwenden. Beispiele für Batterien mit negativer Lithium-Elektrode sind die Lithium-Thionylchlorid-Batterie, die Lithium-Schwefeldioxid-Batterie, die Lithium-Kohlenstoffmonofluorid-Batterie, die Lithium-Eisensulfid-Batterie und die Lithium-Mangandioxid-Batterie. Als positive Elektroden kommen im Fall der letztgenannten Lithium-Mangandioxid-Batterie Mangandioxid-Elektroden, Eisendisulfid-Elektroden im Fall einer Lithium-Eisensulfid-Batterie und im Fall einer Lithium-Schwefeldioxid-Batterie in Acetonitril gelöstes Schwefeldioxid (absorbiert in einer Inertelektrode) zum Einsatz. Die positiven und die negativen Elektrode einer Lithium-Batterie sind durch einen Separator voneinander getrennt. Dieser lässt in der Regel einen lonentransport zwischen den Elektronen zu. Der lonentransport wird dabei durch Einsatz eines geeigneten Elektrolyten gewährleistet.

Ein für eine Lithium-Batterie geeigneter Elektrolyt besteht typischerweise aus einem Lösungsmittel und einem Lithiumsalz mit großem Anion, beispielsweise Lithium-Hexafluorophosphat.

Das Lösungsmittel besteht aus zwei oder mehreren Lösungsmittelkomponenten.

Als erste Lösungsmittelkomponente umfasst es in der Regel ein organisches Carbonat, insbesondere aus der Gruppe mit Propylencarbonat (PC), Ethylencarbonat (EC) und Butylencarbonat (BC), oder einen Ester, insbesondere aus der Gruppe mit γ-Butyrolacton (GBL), Ethylacetat (EA) und Methylformiat (MF). Diese Komponente zeichnet sich durch eine sehr große ionische Leitfähigkeit sowie durch eine hohe Stabilität gegenüber metallischem Lithium aus. Sie ist allerdings relativ viskos.

Als zweite Lösungsmittelkomponente umfasst das Lösungsmittel beispielsweise Dimethoxyethan (DME), Ethylmethylcarbonat (EMC), Dimethylcarbonat (DMC) oder Diethylcarbonat (DEC). Alle diese Verbindungen weisen eine im Verhältnis zur ersten Komponente vergleichsweise niedrige Viskosität auf. Ihre Anwesenheit senkt somit insgesamt die Viskosität des Elektrolyten. Im Gegenzug erhöht sich seine ionische Leifähigkeit.

Für Lithium-Primärbatterien eignet sich als zweite Komponente insbesondere DME. Ein besonders bevorzugtes Lösungsmittel für Lithium-Primärbatterien besteht typischerweise aus PC und DME. Es kommt sowohl in Knopf- als auch in Rundzellen zum Einsatz. Ein Beispiel für eine Lithiumbatterie mit einem Lösungsmittelgemisch aus PC und DME ist in der JP 2009-289631 A beschrieben.

Seit einiger Zeit gibt es Hinweise darauf, dass DME fortpflanzungsgefährdend ist. Aufgrund dessen hat die European Chemical Agency (ECHA) entschieden, DME auf die "Liste der für eine Zulassung in Frage kommenden besonders besorgniserregenden Stoffe" einzutragen. Demzufolge ist zukünftige Zulassungvon DME unsicher.

Aus der US 4401735 A ist eine Lithiumbatterie bekannt, die als Elektrolyten in 1,3-Dioxolan (DOL) gelöstes Lithiumperchlorat aufweist. Weiterer DOL-haltige Elektrolyten sind aus der US 2009/214950 A1 und der US 4490449 A bekannt.

In der Veröffentlichung Tobishima S.-I. et al: "Ethylene carbonate/ether mixed solvents electrolyte for lithium batteries", ELECTROCHIMICA ACTA, ELSEVIER SCIENCE PUBLISHERS, BARKING, GB, Bd. 29, Nr. 10, 1. Oktober 1984 (1984-10-01), Seiten 1471-1476, ist ein Lösemittelgemisch enthaltend PC und DOL beschrieben.

Aus der JP 2009-123470 A ist es bekannt, Lösungsmittelgemische aus PC und DOL zu verwenden. DOL kommt hier stets mit 3,5-Dimethylisoxaxol als Stabilisator zum Einsatz.

Aus der US 2009/0123844 A1 ist eine Elektrode für eine Lithiumbatterie bekannt, die einen Elektrolyten aus PC und DOL umfasst, Die Elektrode enthält einen Russ mit hohem BET-Wert in einem Anteil von 0,1 Gew.-%.

Der vorliegenden Erfindung lag die Aufgabe zugrunde, Lithium-Primärbatterien bereitzustellen, deren Elektrolyt frei von DME ist. Der Ersatz von DME sollte dabei möglichst nicht mit Nachteilen betreffend die Funktionsfähigkeit des Elektrolyten einhergehen.

Dies Aufgabe wird gelöst durch die Batterie mit den Merkmalen des Anspruchs 1. Bevorzugte Ausführungsformen der erfindungsgemäßen Lithium-Primärbatterie sind in den abhängigen Ansprüchen 2 bis 3 angegeben.

Die erfindungsgemäße Lithium-Batterie umfasst wie alle aus dem Stand der Technik bekannten Lithium-Batterien eine positive Elektrode, eine negative Elektrode, einen zwischen der positiven und der negativen Elektrode angeordneten Separator und einen flüssigen Elektrolyten aus einem Lösungsmittel und mindestens einem Lithium-Leitsalz, mit dem die Elektrode und der Separator getränkt sind.

Bei der Lithium-Batterie handelt es sich um eine Primärbatterie, also um eine Batterie, die nicht zum Wiederaufladen vorgesehen ist.

Bevorzugt handelt es sich bei der Batterie um eine Einzelzelle mit jeweils genau einer positiven und einer negativen Elektrode.

Im Gegensatz zu den meisten aus dem Stand der Technik bekannten Lithium-Batterien ist die erfindungsgemäße Batterie frei von DME. Konkreter: Sie weist einen Elektrolyten auf, der frei von DME ist.

Das Lösungsmittel des Elektrolyten umfasst als eine erste Lösungsmittelkomponente PC und als eine zweite Lösungsmittelkomponente 1,3-Dioxolan (DOL). In bevorzugten Ausführungsformen kann das Lösungsmittel des Elektrolyten aus diesen beiden Komponenten bestehen.

Die positive Elektrode und/oder die negative Elektrode weist einen Anteil Ruß mit einer BET-Oberfläche im Bereich von 1 m²/g bis 30 m²/g, bestimmt nach DIN ISO 9277, auf.

Erfindungsgemäß enthalten die positive Elektrode und/oder die negative Elektrode den Ruß in einem Anteil von 2 bis 10 Gew.-%, bevorzugt von 2 bis 5 Gew.-% (bezogen auf das Trockengewicht der festen Bestandteile der Elektrode). In der Regel setzt sich das Trockengewicht der Elektrode aus dem Gewicht des Anteils Ruß und eines Aktivmaterials sowie gegebenenfalls eines Binders zusammen.

Der Ersatz von DME durch das DOL hatte bei ersten Versuchen eine Kapazitätsabnahme zur Folge, wenn diese auch geringer ausfiel als bei Verwendung der eingangs genannten weiteren zweiten Lösungsmittelkomponenten. Überraschenderweise konnte diese Kapazitätsabnahme allerdings noch einmal deutlich verringert werden, indem Ruß mit den genannten BET-Werten verwendet wurde.

In bevorzugten Ausführungsformen umfasst das Lösungsmittel das PC in einem Anteil im Bereich von 30 Vol.-% bis 60 Vol.-% und das DOL in einem Anteil von 40 Vol.-% bis 70 Vol.-%.

In einigen besonders bevorzugten Ausführungsformen können sich die Anteile des PC und des DOL an dem Lösungsmittel auf 100 Vol.-% addieren.

In weiteren bevorzugten Ausführungsformen kann das Lösungsmittel neben dem PC und dem DOL als dritte Lösungsmittelkomponente Ethylencarbonat (EC) umfassen.

Es wurde gefunden, dass sich die Kapazitätswerte der erfindungsgemäßen Batterie durch den Zusatz des EC noch weiter verbessern lassen.

In diesen Ausführungsformen ist es bevorzugt, dass das Lösungsmittel das EC in einem Anteil im Bereich von 0 Vol.-% bis 50 Vol.-% umfasst.

In einigen besonders bevorzugten Ausführungsformen können sich die Anteile des PC und des DOL und des EC an dem Lösungsmittel auf 100 Vol.-% addieren.

Als das mindestens eine Lithium-Leitsalz umfasst der Elektrolyt besonders bevorzugt Lithiumperchlorat (LiClO₄). Das Leitsalz, insbesondere das LiClO₄, ist in dem Elektrolyten bevorzugt in einer Konzentration im Bereich von 5 Gew.-% bis 17 Gew.-% enthalten.

Es kann bevorzugt sein, dass der Elektrolyt einer erfindungsgemäßen Batterie Additive umfasst. Bekannte Beispiele hierfür sind Propansulton oder Vinylencarbonat, die sich stabilisierend auf die Elektrolyten von Lithium-Ionen-Batterien auswirken können.

Additive können in dem Elektrolyten in einem Anteil von bis zu 10 Gew.-%, bevorzugt von bis zu 5 Gew.-%, enthalten sein.

In besonders bevorzugten Ausführungsformen der erfindungsgemäßen Batterie umfasst die positive Elektrode als Aktivmaterial Mangandioxid.

Die negative Elektrode der erfindungsgemäßen Batterie umfasst in bevorzugten Ausführungsformen als Aktivmaterial metallisches Lithium.

Die positive und/oder die negative Elektrode enthalten in bevorzugten Ausführungsformen einen Elektrodenbinder. Hierbei kann es sich beispielsweise um Carboxymethylzellulose oder um ein Carboxymethylzellulosederivat handeln.

Als Separator kann eine erfindungsgemäße Batterie z.B. einen Polyolefinseparator aufweisen.

Die beschriebenen sowie weitere Merkmale der erfindungsgemäßen Batterie ergeben sich auch aus der nun folgenden Beschreibung einer bevorzugten Ausführungsform in Verbindung mit den Unteransprüchen. Die beschriebenen Ausführungsformen dienen lediglich zur Erläuterung und zum besseren Verständnis der Erfindung und sind in keiner Weise einschränkend zu verstehen.

### (1) Erfindungsgemäße Zellen

Testzellen mit einer negativen Elektrode aus metallischem Lithium und einer positiven Elektrode aus Mangandioxid wurde mit einem DME-freien Elektrolyten aus einem Lösungsmittel und einem Leitsalz getränkt. Das Lösungsmittel bestand aus den folgenden Komponenten:
- 43 Vol.-% PC
- 57 Vol.-% DOL

Als Leitsalz wurde LiClO₄ verwendet. Dieses wurde dem Lösungsmittel in einer Konzentration von 10 Gew.-% zugesetzt.

Die positive Elektrode umfasste neben dem Mangandioxid einen Anteil an Ruß von 3 Gew.-%. Der Ruß wies einen BET-Oberfläche von 2 m²/g (bestimmt nach DIN ISO 9277) auf.

### (2) Referenzzellen

Unter identischen Parametern wurden Referenzzellen gefertigt. Bei der Herstellung des Elektrolyten wurde an Stelle von DOL das klassische DME verwendet. Das Lösungsmittel bestand aus den folgenden Komponenten:
- 59 Gew.-% PC
- 31,2 Gew.-% DME

Als Leitsalz wurde LiClO₄ verwendet. Dieses wurde dem Lösungsmittel in einer Konzentration von 9,8 Gew.-% zugesetzt.

Die positive Elektrode umfasste neben dem Mangandioxid einen Anteil an Ruß von 3 Gew.-%. Der Ruß wies einen BET-Wert von 0,6 auf.

### (3) Vergleichsuntersuchungen

Bei einer Entladung mit einem Widerstand von 620 Ω erreichten die erfindungsgemäßen Testzellen Kapazitätswerte von 837 bis 885 mAh. Die gemessenen Kapazitätswerte für die Referenzzellen betrugen 830 bis 857 mAh.

Verwendet man an Stelle von DME andere handelsübliche Lösungsmittel, z.B. EMC oder GBL, stellt man fest, dass unter gleichen Entladebedingungen deutlich kleinere Kapazitätswerte erreicht werden.

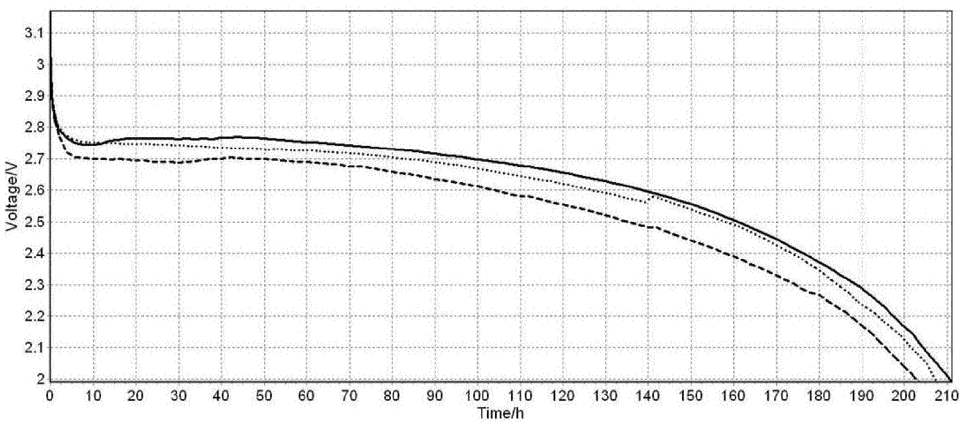

Die Entladekurven der erfindungsgemäßen Zelle (durchgezogene und gepunktete Linie) und einer Referenzzelle (gestrichelte Linie) sind in Fig. 1 dargestellt.

## Patentansprüche

1. DME-freie Lithium-Batterie mit den folgenden Merkmalen
a. Sie umfasst eine positive Elektrode,
b. Sie umfasst eine negative Elektrode,
c. Sie umfasst einen zwischen der positiven und der negativen Elektrode angeordneten Separator,
d. Sie umfasst einen flüssigen Elektrolyten aus einem Lösungsmittel und mindestens einem Lithium-Leitsalz, mit dem die Elektrode und der Separator getränkt sind,
sowie den zusätzlichen Merkmalen
e. Das Lösungsmittel umfasst als eine erste Lösungsmittelkomponente Propylencarbonat (PC) in einem Anteil im Bereich von 30 Vol.-% bis 60 Vol.-% und als eine zweite Lösungsmittelkomponente 1,3-Dioxolan (DOL) in einem Anteil von 40 Vol.-% bis 70 Vol.-%, oder das Lösungsmittel umfasst neben dem PC und dem DOL als dritte Lösungsmittelkomponente Ethylencarbonat (EC), wobei das Lösungsmittel das PC in einem Anteil im Bereich von 10 Vol.-% bis 60 Vol.-% und das DOL in einem Anteil von 40 Vol.-% bis 70 Vol.-% und das EC in einem Anteil im Bereich von 0 Vol.-% bis 50 Vol.-% umfasst, und
f. Die positive Elektrode und/oder die negative Elektrode weist Ruß mit einer BET-Oberfläche im Bereich von 1 m²/g bis 30 m²/g, bestimmt nach DIN ISO 9277, in einem Anteil von 2 bis 10 Gew.-%, auf.

2. Batterie nach Anspruch 1 mit mindestens einem derzusätzlichen Merkmale
a. Der Elektrolyt umfasst als das mindestens eine Leitsalz Lithiumperchlorat (LiClO₄).
b. LiClO₄ ist in dem Elektrolyten in einer Konzentration im Bereich von 5 Gew.-% bis 17 Gew.-% enthalten.

3. Batterie nach einem der vorhergehenden Ansprüche mit mindestens einem der zusätzlichen Merkmale
a. Die positive Elektrode umfasst als Aktivmaterial Mangandioxid.
b. Die negative Elektrode umfasst als Aktivmaterial metallisches Lithium.

## Claims

1. DME-free lithium battery having the following features
a. it comprises a positive electrode,
b. it comprises a negative electrode
c. it comprises a separator arranged between the positive electrode and the negative electrode,
d. it comprises a liquid electrolyte which is composed of a solvent and at least one lithium electrolyte salt and with which the electrode and the separator are impregnated,
and also the additional features
e. the solvent comprises propylene carbonate (PC) in a proportion in the range from 30% by volume to 60% by volume as first solvent component and 1,3-dioxolane (DOL) in a proportion of from 40% by volume to 70% by volume as second solvent component, or the solvent comprises ethylene carbonate (EC) as third solvent component in addition to the PC and the DOL, where the solvent comprises the PC in a proportion in the range from 10% by volume to 60% by volume and the DOL in a proportion of from 40% by volume to 70% by volume and the EC in a proportion in the range from 0% by volume to 50% by volume, and
f. the positive electrode and/or the negative electrode comprises carbon black having a BET surface area in the range from 1 m²/g to 30 m²/g, determined in accordance with DIN ISO 9277, in a proportion of from 2 to 10% by weight.

2. Battery according to Claim 1 having at least one of the additional features
a. the electrolyte comprises lithium perchlorate (LiClO₄) as the at least one electrolyte salt,
b. LiClO₄ is present in a concentration in the range from 5% by weight to 17% by weight in the electrolyte.

3. Battery according to either of the preceding claims having at least one of the additional features
a. the positive electrode comprises manganese dioxide as active material,
b. the negative electrode comprises metallic lithium as active material.

## Revendications

1. Pile au lithium exempte de DME dotée des caractéristiques suivantes
a. elle comprend une électrode positive,
b. elle comprend une électrode négative,
c. elle comprend un séparateur disposé entre l'électrode positive et l'électrode négative,
d. elle comprend un électrolyte liquide composé d'un solvant et d'au moins un sel conducteur de lithium, avec lequel l'électrode et le séparateur sont imprégnés,
ainsi que des caractéristiques supplémentaires :
e. le solvant comprend, en tant qu'un premier composant de solvant, du carbonate de propylène (CP) en une proportion dans la plage de 30 % en volume à 60 % en volume et, en tant qu'un deuxième composant de solvant, du 1,3-dioxolanne (DOL) en une proportion de 40 % en volume à 70 % en volume, ou le solvant outre le CP et le DOL comprend, en tant que troisième composant de solvant, du carbonate d'éthylène (CE), le solvant comprenant le CP en une proportion dans la plage de 10 % en volume à 60 % en volume et le DOL en une proportion de 40 % en volume à 70 % en volume et le CE en une proportion dans la plage de 0 % en volume à 50 % en volume, et
f. l'électrode positive et/ou l'électrode négative présentent de la suie dotée d'une surface BET dans la plage de 1 m²/g à 30 m²/g, déterminée d'après la norme DIN ISO 9277, en une proportion de 2 à 10 % en poids.

2. Pile selon la revendication 1, dotée d'au moins une des caractéristiques supplémentaires :
a. l'électrolyte comprend, en tant que l'au moins un sel conducteur, du perchlorate de lithium (LiClO₄),
b. LiClO₄ est contenu dans l'électrolyte en une concentration dans la plage de 5 % en poids à 17 % en poids.

3. Pile selon l'une quelconque des revendications précédentes, dotée d'au moins une des caractéristiques supplémentaires :
a. l'électrode positive comprend du dioxyde de manganèse en tant que matériau actif,
b. l'électrode négative comprend du lithium métallique en tant que matériau actif.
